(19) Europäisches Patentamt
European Patent Office
Office européen des brevets

(11) **EP 2 568 463 A1**

(12) **EUROPEAN PATENT APPLICATION**

(43) Date of publication:
**13.03.2013 Bulletin 2013/11**

(51) Int Cl.:
***G09C 5/00*** *(2006.01)*

(21) Application number: **11306116.2**

(22) Date of filing: **08.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Heen, Olivier
92443 Issy-les-Moulineaux (FR)**

• **Maetz, Yves
92443 Issy-les-Moulineaux (FR)**
• **Eluard, Marc
92443 Issy-les-Moulineaux (FR)**

(74) Representative: **Ruellan-Lemonnier, Brigitte
Technicolor
European Patent Operations
1-5 Rue Jeanne d'Arc
92443 Issy-les-Moulineaux Cedex (FR)**

(54) **Methods and devices for protecting digital objects through format preserving coding**

(57) To code a digital object (310), a sender (110) preferably encrypts (210) its data to obtain a bitstream that is converted (230) into a set of points (320) that are then packaged (240) and the coded object (330) is output (250). A receiver (140) receives (260) and unpacks (270) the coded object (330) to obtain the set of points (320), converts (280) the set of points (320) to a bitstream that, if needed, is decrypted (290) to generate the original object (310) that is output (295). The invention is particularly suited for protection of 3D objects, but it can also be used to protect any kind of digital data, in which case it may be possible to append the protected data of another kind to a 3D object.

Figure 2

**Description**

TECHNICAL FIELD

The present invention relates generally to digital data protection and in particular to the coding of protected digital objects in virtual environments.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Generally, confidentiality protection is implemented using data encryption. The object to be protected is often considered as a basic data buffer that is encrypted to prevent unauthorized users from exploiting it. In this case, the semantics of the object tend to be lost, which often means that the protected object cannot be processed at all.

This is usually the case for three-dimensional (3D) objects. The use of such 3D objects has been increasing in the last years, particularly with the emergence of metaverses. There are multiple usages for 3D objects: socializing worlds, games, mirroring worlds, simulation tools, but also 3D User interfaces, animation movies and visual effects for television. Generally, 3D virtual objects represent real money value. In socializing worlds and games, players are selling virtual objects or avatars to other players for real money. Building an experienced character within an online game is a very lengthy process that can require hundreds of hours behind the keyboard. The 3D model of a real-world object from a simulation tool allows manufacturing the real (counterfeit) object and selling it. Leaking the 3D model for a scene of the next blockbuster from Hollywood studios may result in bad press for the studios. As can be seen, in many cases, 3D objects are assets of great value for their owner.

Strategies for content protection comprise confidentiality protection - intended to make it impossible for unauthorized users to access the content, e.g. by encryption - and watermarking - intended to make it possible to track a user who has disseminated the content without authorization to do so.

Basic methods of 3D content protection focus on the entire data, i.e. all the data is either encrypted or watermarked (or both), although these methods are somewhat crude.

More subtle ways of protecting 3D content is to protect one or more of its 3D objects. This is possible as 3D content often is made up of a number of distinct objects positioned in a setting. When each 3D object is coded as a separate entity, it becomes possible to protect each of these separately and it is not necessary to protect all of them.

For example, US 2008/0022408 describes a method of 3D object protection by storing the "bounding box" of the object as non-encrypted data in one file and the protected 3D object as encrypted data in a separate file. Any user may access the non-encrypted data, but only authorized users can access the encrypted data; non-authorized users see a basic representation thereof (i.e. the bounding box), such as a parallelepiped instead of a car. However, this method was developed to be used with 3D rendering software and is less suited for multimedia content, such as video and film. In addition, the file format (one file with non-encrypted data and one file with encrypted data) is non-standard and is thus usable only by adapted rendering devices, not standard ones. Indeed, the encrypted data does not respect the syntax of most 3D techniques and can thus normally not be used.

US 6678378 describes a solution for protecting a 3D Computer Aided Design (CAD) object by encryption. The solution may encrypt one of the coordinate values of the nodes and the equations for the edges or the contours, by nonlinear or affine transformation, thereby distorting the 3D object or by 'normal' encryption such as RSA.

Problems with this solution is that the calculations may be costly (in particular when using RSA) and that the distortions may not be sufficient to deter a malicious user from using the content nevertheless. In addition, in the case of 'normal' encryption, the 3D object may not be readable at all by a content consuming device - such as a computer or a television - which may be a drawback in some cases.

A digital rights enabled graphics processing system was proposed in 2006 by Shi, W., Lee, H., Yoo, R., and Boldyreva, A: A Digital Rights Enabled Graphics Processing System. In GH '06: Proceedings of the 21st ACM SIGGRAPH/EUROGRAPHICS symposium on Graphics hardware, ACM, 17-26.]. With this system, the data composing the 3D object (collection of vertices, textures) is encrypted. Their decryption is handled within the Graphic Processing Unit, under control of licenses. It is proposed also to use multi resolution meshes to deliver simultaneously a protected and unprotected version of a 3D element. Although the system itself is a real progress towards secure 3D environments, the use of protected scenes with other Virtual Reality Modelling Language (VRML) renderers will lead to interoperability issues.

David Koller and Marc Levoy describe a system for protection of 3D data in which high-definition 3D data is stored in a server. The users have access to a low-definition 3D object that they can manipulate and when a user has chosen a view, a request is sent to the server that returns a two-dimensional JPEG that corresponds to the view. Hence the high-definition 3D data is protected as it is never provided to the users. (See "Protecting 3D Graphics Content" by David Koller and Marc Levoy. Communications of the ACM, June 2005, vol. 48, no. 6.) While this system works well for its intended use, it is not applicable when the full 3D data is to be transferred to a user.

A common problem with the prior art solutions is that they are not format preserving, but that they are based on the encryption of 3D data and that they provide a second set of 3D data that is usable by non-authorized devices so that the user can see something, e.g. a bounding box.

European patent application 10305692.5 describes a format preserving solution in which a 3D object comprising a list of points (i.e. vertices) is protected by permuting the coordinates of at least some of its points. European patent application 10306250.1 describes a similar solution in which the coordinates of at least one dimension of the vertices of a 3D object are permuted independently of the other dimensions. The lists detailing how the points are connected remain unchanged, but the 3D object no longer "makes sense" as these points no longer have the initial values. Advantages of these solutions is that the protected 3D object is readable also by devices that are not able to 'decrypt' the protected 3D object - although it does look very strange - and that the protected 3D object is inscribed in a bounding box of the same size as the original 3D object.

While the latter solutions work well, it will be appreciated that there may be a need for an alternative solution that can enable protection of digital (in particular 3D) objects with quick calculations that still enables an unauthorized content consuming device to read and display the digital object, albeit in a manner that renders the viewing thereof unsatisfactory, and that is resistant to reconstruction techniques. The present invention provides such a solution.

## SUMMARY OF INVENTION

In a first aspect, the invention is directed to a method of coding a digital object. A device receives the digital object, converts at least a bit sequence of the digital object into a set of points with coordinates and outputs the coded digital object.

In a first preferred embodiment, the device further encrypts at least some of the data of the digital object to obtain the bit sequence;

In a second preferred embodiment, the device further formats the set of points (320) into a predetermined format to obtain the coded digital object.

In a third preferred embodiment, the digital object is the file representation of a graphical object.

In a fourth preferred embodiment, the coded digital object is a file representation of a graphical object.

In a fifth preferred embodiment, the set of points is added to a further digital object to obtain the coded digital object.

In a second aspect, the invention is directed to a device for coding a digital object. The device comprises a processor adapted to receive the digital object, convert at least a bit sequence of the digital object into a set of points with coordinates and output the coded digital object.

In a third aspect, the invention is directed to a method of decoding a coded digital object. A device receives the coded digital object comprising a set of points with coordinates, converts the set of points with coordinates into a bit sequence to obtain a further digital object, and outputs the further digital object.

In a first preferred embodiment, the device further decrypts the further digital object before output.

In a second preferred embodiment, the device further extracts the set of points from the coded digital object.

In a third preferred embodiment, the further digital object is the file representation of a graphical object.

In a fourth preferred embodiment, the coded digital object is a file representation of a graphical object.

In a fifth preferred embodiment, the set of points is extracted from a further digital object to obtain the coded digital object.

In a fourth aspect, the invention is directed to a device for decoding a coded digital object. The device comprises a processor adapted to receive the coded digital object comprising a set of points with coordinates, convert the set of points with coordinates into a bit sequence to obtain a further digital object, and output the further digital object.

In a fifth aspect, the invention is directed to a computer program support storing thereon instructions that, when executed by a processor, perform the method of any embodiment of the third aspect.

## BRIEF DESCRIPTION OF DRAWINGS

Preferred features of the present invention will now be described, by way of non-limiting example, with reference to the accompanying drawings, in which

Figure 1 illustrates a system for protecting a 3D object according to a preferred embodiment of the present invention;

Figure 2 illustrates a method for protecting a 3D object according to a preferred embodiment of the present invention; and

Figures 3A, 3B and 3C illustrate protection of a 3D object according to a preferred embodiment of the present invention.

DESCRIPTION OF EMBODIMENTS

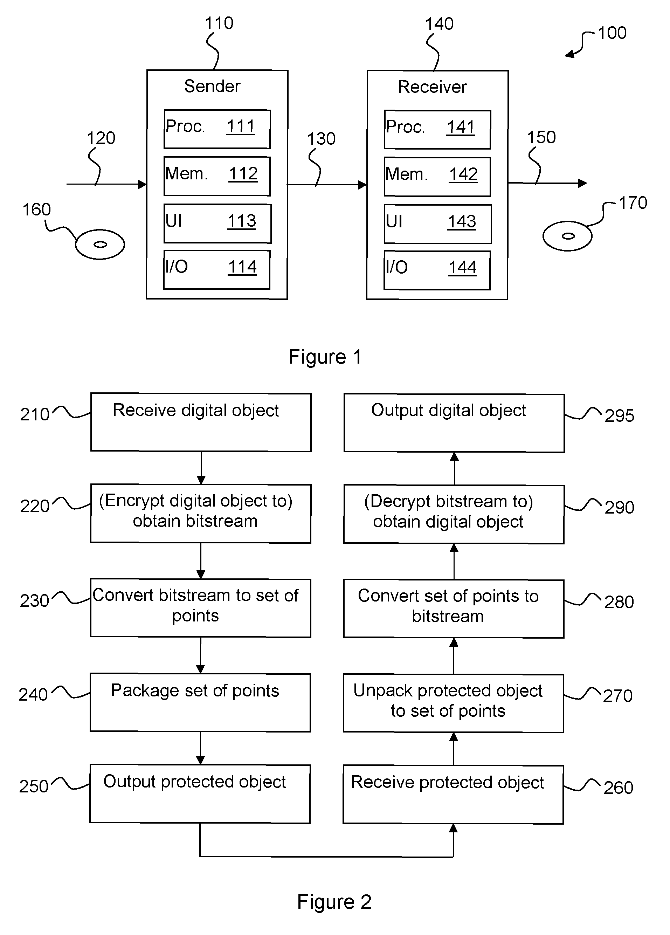

Figure 1 illustrates a system 100 for coding a digital object according to a preferred embodiment of the present invention and Figure 2 illustrates a method for coding a digital object according to a preferred embodiment of the present invention. The coding advantageously comprises encryption of the digital object.

As an illustrative non-limitative example, the digital object is converted into three-dimensional (3D) points, such as may be used to express a 3D object in for example VRML (Virtual Reality Modelling Language), X3D (Extensible 3D Graphics), COLLADA (COLLAborative Design Activity) and Autodesk 3DS Max (Autodesk 3D Studio Max). It will however be appreciated that also two-dimensional points may be used by for example the DOT language and SVG (Scalable Vector Graphics) and that higher-order points may also be used.

An exemplary typical 3D object to protect is

```
geometry IndexedFaceSet {
        coord Coordinate {
          point [
          -2.0 2.0 2.0 , 2.0 2.0 2.0 , 2.0 -2.0 2.0 , -2.0 -
2.0 2.0 , 0.0 0.0 -2.0
          ]
        }
        coordIndex [
        0,1,4,-1,1,2,4,-1,2,3,4,-1,3,0,4,-1,3,2,1,0
        ]
```

The point coordinates are listed in the point[] structure, while the surfaces are defined in the coordIndex[] structure. As can be seen, a 3D object can be defined by at least a point set and surfaces, where a point is defined by triplet of coordinates expressed with floating values.

The system 100 comprises a sender 110 and a receiver 140, each comprising at least one processor 111, 141, memory 112, 142, preferably a user interface 113, 143, and at least one input/output unit 114, 144. The sender 110 may for example be a personal computer or a workstation, while the receiver 120 for example may not only be a personal computer or a workstation, but also a television set, a video recorder, a set-top box or the like.

The sender 110 receives 210 a digital object 120 to be protected and encrypts 220 the digital object to obtain a bitstream. Any suitable encryption method may be used, such as Advanced Encryption Standard (AES) or Blowfish. It is advantageous to consider the 3D object, i.e. the point coordinates and the surface information, as binary input, and encrypt at least some of its data. In particular, it is not necessary to preserve any semantics. Thus it may be sufficient to encrypt for example the values in the 'point' field.

Continuing the example, the bitstream, i.e. the encrypted digital object, is 1010111101110001010100010111 10101101011010010111000001001... For ease of illustration, this is merely the beginning of the bitstream; the complete bitstream is much bigger.

It should however be noted that encryption is not a mandatory step. In a variant embodiment, a goal is data coding, i.e. how to represent data in a different format. In this case, the original digital object is not encrypted but regarded as a bitstream for the next step of the method. Naturally, if encryption is not used at the sender side, then decryption is not used at the receiver side either.

The bitstream is then converted 230 into a set of points. Briefly, each point has a number of coordinates and the conversion is made so that 1) the 'pointification' is reversible, 2) the coordinates are usable in a rendering environment, and 3) the pointification is compatible with the representation of numbers in the rendering environment.

Two detailed examples for three dimension 'pointification' are given hereinafter. For both examples the precision of the point coordinates is at most three digits.

The set of points is then packaged 240 to create a virtual object that complies with the target environment, i.e. with VRML, X3D, etc. During this step, the set of points may be enclosed in a basic "hyperbox" shape, i.e. a shape such as a sphere or a parallelepiped that surrounds all the points. In the general case, the hyperbox is preferably a c-dimensional parallelotope that encompasses all of the generated points. While there is no limit to how big the hyperbox can be (as far as the invention is concerned), it is advantageous that it is as small as possible (i.e. at least one point is on each of its faces) since this size is easy to calculate from the points.

In a preferred embodiment of the present invention, the original digital object results in a distinct protected (or, as the case may be, coded) digital object. However, in a variant embodiment, the protected digital object may be combined with, preferably appended to, a further digital object that preferably has the same format as the protected object. For example, assuming that the original digital object is a file representing the sound of a door that opens and that the further digital object is a 3D object representing the door, then it is possible to use the present method to code the sound file to the 3D points of the same format as the 3D door object and include the 'sound file' points in the 'door' object. It is however important to note that packaging step 240 in this case does not comprise the creation of a new object, but the addition of the points to an existing object. In this case, the receiver extracts the added points from the object before further processing; this may for example be done by identifying the points of the 'door' object that are not linked to form surfaces, but other ways are also possible. In most cases, the receiver knows what to expect of a received digital object that is combined with another digital object; for example a game would 'know' that the 3D door also comprises the sound file. In the cases where the receiver does not have such knowledge, it may be necessary to append information to this end, for example as meta-data.

The sender 110 then outputs 250 the protected object, for example by transmission to the receiver 140 over connexion 130 or by storing the protected object in a memory or on another kind of storage support (e.g. a DVD).

The skilled person will appreciate that the protection method of the present invention is ideally suited for protection of digital objects that are associated with e.g. 3D objects, as the invention makes it possible to append the protected object to the 3D object to make a 'hyperobject'. An example of this is a computer game in which a door is expressed as a 3D object and in which the door is associated with a sound that is to be played when the door is opened; the sound file can then be protected using the method of the invention and appended to the 3D "door object". Another example is the protection of a script that is to be executed when a player interacts with a 3D object.

On the receiver side, the receiver 140 receives 260 the protected object. The receiver then unpacks 270 the protected object to obtain the set of points, possibly removing the hyperbox. The set of points is then converted 280 into a bitstream, using the inverse of the 'pointification' methods, examples of which are detailed hereinafter. The bitstream is then decrypted 290 to obtain the digital object. It may be necessary to put the decrypted data 'back' into its container; for example if the received protected object is a VRLM object, then the decrypted data should first be put into the 'point' section of the object and/or other sections of the object.

It will be appreciated that user authorization and key management and so on is out of the scope of the present invention; it is assumed that the sender and the receiver both 'know' which key to use. The digital object may then be output 295, e.g. through interface 150.

First pointification method

The first pointification method takes the bitstream's binary representation as input, i.e. 101011110111000101 010001011101011010110100101110000001001...

First the binary representation is split into three-bit blocks and each block is converted to its decimal representation, giving a value between 0 and 7. Continuing the example, this gives the following 19 digit values:

| | | | | | | | | |
|---|---|---|---|---|---|---|---|---|
| $d_1$ | 101b = | 5 , | $d_2$ | 011b = | 3 , | $d_3$ | 110b = | 6 |
| $d_4$ | 111b = | 7 , | $d_5$ | 000b = | 0 , | $d_6$ | 101b = | 5 |
| $d_7$ | 010b = | 2 , | $d_8$ | 001b = | 1 , | $d_9$ | 011b = | 3 |
| $d_{10}$ | 101b = | 5 , | $d_{11}$ | 011b = | 3 , | $d_{12}$ | 010b = | 2 |
| $d_{13}$ | 110b = | 6 , | $d_{14}$ | 100b = | 4 , | $d_{15}$ | 101b = | 5 |
| $d_{16}$ | 110b = | 6 , | $d_{17}$ | 000b = | 0 , | $d_{18}$ | 010b = | 2 |
| $d_{19}$ | 01 b = | 1 | | | | | | |

Coordinates may then be constructed by using at most 3 of the digits placed after a radix.

Continuing the example further, this gives the following 6 coordinates from the first 18 digits:

| | | | | | |
|---|---|---|---|---|---|
| $c_1$ : | 0.536 , | $c_2$ : | 0.705 , | $c_3$ : | 0.213 |
| $c_4$ : | 0.532 , | $c_5$ : | 0.645 , | $c_6$ : | 0.602 |

As has been mentioned, the bitstream is likely to be much longer, but for illustrative purposes it is assumed

that $d_{19}$ is the last digit.

$d_{19}$ is used to generated a seventh coordinate, i.e. $c_7$=0.1. An additional value can be used to encode the number of bits (i.e. 1, 2 or 3 in the embodiment) used to generate the last digit, which in the example is 2 for $d_{19}$; $d_{20}$: 2. This value is used to generate another coordinate and is added to the coordinate list; $c_8$: 0.2.

Depending on the number of dimensions used - e.g. 3 for a 3D object - it may be necessary to pad with further coordinates in order to reach a sufficient number. In the example, there are 8 coordinates, which means that a ninth coordinate is needed in order to have a multiple of 3. It is advantageous to add a special coordinate such as 0.9, which is added since the decimal value of 9 cannot be obtained by interpreting three bits as a decimal number. Thus $c_9$: 0.9.

Finally, the generated coordinates are used to generate a number of points. The easiest way is to generate the first point from the first three coordinates in a FIFO kind of way, but other possibilities exist. This yields the following three points:

$P_1$ (0.536, 0.705, 0.213)
$P_2$ (0.532, 0.645, 0.602)
$P_3$ (0.1, 0.2, 0.9)

Second pointification method

The second pointification method converts the binary bitstream to a decimal number. As an example, the same bitstream as in the first method will be used to illustrate. 10101111011100010101000101110101101011010011 1000001001 is thus represented as 49382715604938249.

The decimal representation is then split into sequences corresponding to the precision of the coordinates systems. For a precision of three digits, this gives the sequences 493, 827, 156, 049, 382 and 49. The last sequence is padded with zeroes if it does not comprise three digits, which gives 490 for the last sequence. The number z of zeroes used as padding can be coded as a further point of the point set, with coordinates (0.0... 0z, 0.000, 0.000), which in the present example gives the further point as (0.001, 0.000, 0.000), since z=001.

Floating coordinates are then generated, using 0 as the integer part and the sequences as the fractional part, which gives (0.493, 0.827, 0.156), (0.049, 0.382, 0.490) and (0.001, 0.000, 0.000).

Thus the output of the pointification is:

$P_1$ (0.493, 0.827, 0.156)
$P_2$ (0.049, 0.382, 0.490)
$P_3$ (0.001, 0.000, 0.000)

Generic form

Introducing some notations, it is possible to provide a generic formula. $n$ is the number of decimal digits, $c$ is the dimension of the coordinate system, k is the precision of the coordinate system, $d_j$ is the $j^{th}$ digit in the decimal representation of the Encrypted Data. Under these notations, the coordinates of the $i^{th}$ calculated point are: $(0.d_{vi+1} \dots d_{vi+k}, \dots, 0.d_{vi+(c-1)*k+1} \dots dv_{i+c*k})$ where $v_i = \left\lceil \frac{n}{k} \right\rceil * c * i$. If any, digits from $d_{n+1}$ to $d_{c*\left(\left\lceil \frac{n}{k} \right\rceil * n + k\right)}$ are set to zero.

The skilled person will appreciate that the provided algorithms generate points with coordinates less than 1; no extra normalization is required for objects larger than the unit box. The algorithms are also independent from the internal representation of floating values and thus no 'endian-ness' processing is required.

The skilled person will appreciate that the algorithms may generate integer values instead of floating numbers.

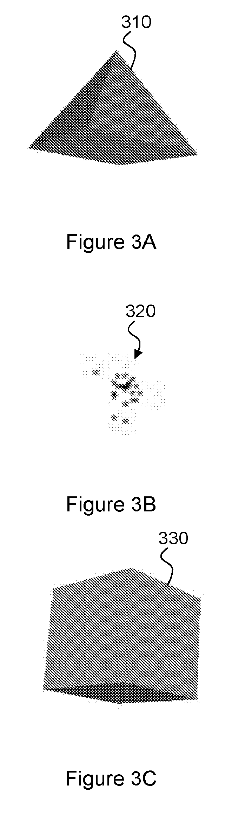

Figures 3A, 3B and 3C illustrate protection of a 3D VRLM object using a preferred embodiment of the present invention. The original 3D object 310, a pyramid, as rendered is shown in Figure 3A, while its file representation is

```
#VRML V2.0 utf8
#skiped prelude
Transform {
  children [
   Shape {
    #skiped apparence information
    geometry IndexedFaceSet {
      coord Coordinate {
       point [
```

```
        -2 2 2,2 2 2,2 -2 2,-2 -2 2, 0 0 -2
       ]
      }
     coordIndex [
      0, 1, 4, -1, 1, 2, 4, -1, 2, 3, 4, -1, 3, 0, 4, -1, 3, 2, 1, 0
      ]
    }
   }
  }
 ]
      }
```

It should be noted that it is possible, particularly when the original digital object and the coded digital object are of the same type, to code only certain data of the file representation such as for example the values of the points, the values of coordIndex, etc. In a preferred embodiment, the entire file is used as input to the coding method.

The generated set of points 320 can be rendered as shown in Figure 3B, while the (hypothetical) file representation is

```
#VRML V2.0 utf8
#skiped prelude
Transform {
    children [
      Shape {
        #skiped apparence information
        geometry IndexedFaceSet {
          coord Coordinate {
            point [
            0.56792 0.54465 0.41279,
            0.54127 0.14579 0.56441,
            0.09146 0.32792 0.16625,
            0.75680 0.50858 0.24600
            ]
          }
          coordIndex [ ]
        }
      }
    ]
      }
```

In the present example, the coded data is put into the point field of the file representation, while coordIndex is empty. While coded data could be put into the latter, it is preferred not to do so since the field relates to how the points should be linked, giving rise to lines and surfaces. As it is common that the points themselves are not rendered, while lines and surfaces are, an object comprising only points is not visible and would not disturb a viewer.

The packaged set of points 330 including the hyperbox is rendered as shown in Figure 3C, while the file representation is #VRML V2.0 utf8

```
#skiped prelude
Transform {
  children [
   Shape {
    #skiped apparence information
    geometry IndexedFaceSet {
      coord Coordinate {
       point [
         -2 -2 -2,-2 2 -2,2 2 -2,2 -2 -2,
         -2 -2 2,-2 2 2,2 2 2,2 -2 2,
         0.56792 0.54465 0.41279,
         0.54127 0.14579 0.56441,
         0.09146 0.32792 0.16625,
         0.75680 0.50858 0.24600
        ]
      }
      coordIndex [
```

```
    0, 1, 2, 3, -1, 4, 7, 6, 5, -1, 2, 6, 7, 3, -1, 0, 4,
    5, 1, -1, 1, 5, 6, 2, -1, 0, 3, 7, 4
    ]
   }
  }
]
   }
```

It will be noted that data has been added to the point and coordIndex fields of the file representation. These values correspond to the added bounding box.

It will be appreciated that it may be necessary or desired to limit the values of the resulting points. For example, if the object to protect is a small 3D object, then the first pointification method is likely to result in a protected object that is larger than the original object. Indeed, when the original object coordinates are much smaller than 1.0 (say 0.05 for example), then replacing them by values that can approach 1.0 does not preserve the original bounding box.

To overcome this potential problem, when floating values are used for encoding, it is possible to insert one or more leading zeros after the radix so that the resulting bounding box is smaller than that of the original object (if the objects are of the same type, e.g. 3D objects), as shown in the following table:

| Coordinate Value Range | Output format |
| --- | --- |
| > 1.0 | 0.*XXXXX*... |
| [0.1 ... 1.0[ | 0.0*XXXX*... |
| [0.01 ... 0.1 [ | 0.00*XXX*... |
| [0.001 ... 0.01[ | 0.000*XX*... |
| ... | ... |

Further, if the object to protect is for example a 3D object in a virtual environment, it may be desirable to render the protected object in roughly the same place as the original object. However, the first pointification method leads to a protected object relocated at the origin point of the coordinate system. It may thus be necessary to add an integer offset value to the coordinates in order to displace the protected object accordingly. For example, if the original object was located at (100, 200, 300), then 100 may be added to the 'pointified' x coordinate, 200 to the y coordinate and 300 to the z coordinate.

It will thus be appreciated that the protection method of the present invention can provide a protected object that complies with the format of the original object (or any other target environment). The protection is robust protection since all the data of the unprotected object can be encrypted.

It will also be appreciated that the protected information is not limited to a list of points. In a preferred embodiment a list of surfaces is also protected and texture data may also be protected using the same principle.

In a typical application of the invention, the digital data to protect is a virtual object or a part of a virtual object, but the invention may also be used to protect digital data of any type (sound, video, licenses, keys, program code, binary flow...).

The protection method can produce a Virtual Object that uses only standard fields (of the target environment) in its description. In particular, no proprietary meta-data is required. This increases the potential of interoperability since all standard renderers (for the target environment) are able to use the Virtual Object produced according to the invention.

While the invention has been described for three dimensions, it may also be applied to protect objects in two dimensions or more than three dimensions.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1.   A method of coding a digital object (310), the method comprising the steps, in a device (110), of:

receiving (210) the digital object (310);

converting (230) at least a bit sequence of the digital object (310) into a set of points (320) with coordinates; and
outputting (250) the coded digital object (330).

2. The method of claim 1, further comprising the step of encrypting (220) at least some of the data of the digital object (310) to obtain the bit sequence;

3. The method of claim 1, further comprising the step of formatting (240) the set of points (320) into a predetermined format to obtain the coded digital object (330).

4. The method of claim 1, wherein the digital object (310) is the file representation of a graphical object.

5. The method of claim 1, wherein the coded digital object is a file representation of a graphical object.

6. The method of claim 1, wherein the set of points is added to a further digital object to obtain the coded digital object.

7. A device (110) for coding a digital object (310), the device comprising a processor (111) adapted to:

receive the digital object (310);
convert at least a bit sequence of the digital object (310) into a set of points (320) with coordinates; and
output the coded digital object (330).

8. A method of decoding a coded digital object (330), the method comprising the steps, in a device (140), of:

receiving (260) the coded digital object (330) comprising a set of points with coordinates;
converting (280) the set of points (320) with coordinates into a bit sequence to obtain a further digital object (310); and
outputting (295) the further digital object (310).

9. The method of claim 8, further comprising the step of decrypting (290) the further digital object before output.

10. The method of claim 8, further comprising the step of extracting (270) the set of points (320) from the coded digital object (330).

11. The method of claim 8, wherein the further digital object (310) is the file representation of a graphical object.

12. The method of claim 8, wherein the coded digital object is a file representation of a graphical object.

13. The method of claim 8, wherein the set of points is extracted from a further digital object to obtain the coded digital object.

14. A device (140) for decoding a coded digital object (330), the device comprising a processor (141) adapted to:

receive the coded digital object (330) comprising a set of points with coordinates;
convert the set of points (320) with coordinates into a bit sequence to obtain a further digital object (310); and
output the further digital object (310).

15. A computer program support (170) storing thereon instructions that, when executed by a processor (141), perform the method of any one of claims 8 to 13.

Figure 1

Figure 2

310

Figure 3A

320

Figure 3B

330

Figure 3C

Europäisches
Patentamt

European
Patent Office

Office européen
des brevets

## EUROPEAN SEARCH REPORT

Application Number

EP 11 30 6116

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Various import/export scripts that enable you to use blender with other applications.", <br><br> 22 January 2009 (2009-01-22), XP55018699, Retrieved from the Internet: URL:http://www.blender.org/download/python-scripts/import-export/ [retrieved on 2012-02-08] | 1,3-8, 10-15 | INV. G09C5/00 |
| Y | * pages 1-4 * | 2,9 | |
| X | Mitch Hughes ET AL: "Import Stereo Lithography (.stl) File Format", <br><br> 2 November 2008 (2008-11-02), XP55018622, Retrieved from the Internet: URL:http://farmerjoe.info/batch_stl/1.0/batch_stl.py [retrieved on 2012-02-07] | 1,3-8, 10-15 | |
| Y | * pages 5-7 * | 2,9 | |
| X | Chris Lynch: "Wavefront OBJ Importer/Exporter v1.2", <br><br> 13 December 2001 (2001-12-13), XP55018618, Retrieved from the Internet: URL:http://jmsoler.free.fr/util/blenderfile/py/obj_io_modif232b.py [retrieved on 2012-02-07] | 1,3-8, 10-15 | TECHNICAL FIELDS SEARCHED (IPC)<br><br>G09C |
| Y | * pages 1,6 * | 2,9 | |
| Y | US 2008/022408 A1 (PHELPS NICHOLAS [FR]) 24 January 2008 (2008-01-24) * paragraphs [0030], [0031]; figure 2 * | 2,9 | |
| | -/-- | | |

The present search report has been drawn up for all claims

| Place of search | Date of completion of the search | Examiner |
|---|---|---|
| Munich | 8 February 2012 | Billet, Olivier |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 11 30 6116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kirti Chawla: "A 3D RGB Axis-based Color-oriented Cryptography", , 18 August 2005 (2005-08-18), XP55018695, Retrieved from the Internet: URL:http://arxiv.org/ftp/cs/papers/0508/0508080.pdf [retrieved on 2012-02-08] * pages 3,4 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 8 February 2012 | Billet, Olivier |

EPO FORM 1503 03.82 (P04C01)

## ANNEX TO THE EUROPEAN SEARCH REPORT
## ON EUROPEAN PATENT APPLICATION NO.

EP 11 30 6116

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2012

| Patent document cited in search report | Publication date | Patent family member(s) | Publication date |
|---|---|---|---|
| US 2008022408 A1 | 24-01-2008 | US 2008022408 A1<br>US 2011055583 A1 | 24-01-2008<br>03-03-2011 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080022408 A
- US 6678378 B
- EP 10305692 A
- EP 10306250 A

### Non-patent literature cited in the description

- A Digital Rights Enabled Graphics Processing System. **SHI, W. ; LEE, H. ; YOO, R. ; BOLDYREVA, A.** GH '06: Proceedings of the 21st ACM SIGGRAPH/EUROGRAPHICS symposium on Graphics hardware. ACM, 2006, 17-26
- **DAVID KOLLER ; MARC LEVOY.** Protecting 3D Graphics Content. *Communications of the ACM,* June 2005, vol. 48 (6